# EUROPEAN PATENT APPLICATION

(11) **EP 4 299 158 A1**
(43) Date of publication of application: **03.01.2024**
(21) Application number: 23181601.8
(22) Date of filing: 27.06.2023
(51) Int. Cl.: B01D 27/10, B01D 37/04, B01D 35/02, F04C 18/16, F04C 29/02

(54) **OIL FILTRATION DEVICE, ESPECIALLY FOR INLET OIL-LINES FOR SCREW COMPRESSORS, AND COMPRESSION UNIT INCLUDING SUCH A FILTRATION DEVICE**

(30) Priority: 27.06.2022 IT 202200013543
(71) Applicant: REF Power S.r.l., 36045 Lonigo (VI) (IT)
(72) Inventor: PORTINARI, Diego, 36045 LONIGO (VI) (IT); CANDIO, David, 36045 LONIGO (VI) (IT)
(74) Representative: Marchioro, Paolo

(57) **Abstract**

The present invention relates to a filtration device (10), particularly for oil-lines at the inlet of screw compressors, comprising, hydraulically connected to each other in series:
- a first oil inlet connector (11);
- filtration means, including a filtration chamber (13);
- a first branch (11a) for the hydraulic connection between the first connector (11) and the oil filtration means;
- a solenoid valve (15) to shut off the flow rate of oil, including a transit channel (16);
- a second branch (18) connecting said oil filtration means to said solenoid valve (15);
- a flow switch (19) for detecting the flow rate of oil, said flow switch (19) comprising a fluid passage duct (20);
- a third branch (24) between the solenoid valve (15) and the flow switch (19);
- a second oil outlet connector (23);
- a fourth branch (25) connecting said flow switch (19) to said second connector (23).

The device according to the invention comprises a single body (30) for the oil filtration, within which are shaped:
- said filtration chamber (13);
- said first branch (11a);
- said transit channel (16) of said solenoid valve (15);
- said second branch (18);
- said fluid passage duct (20) of said flow switch (19);
- said third branch (24);
- said fourth branch (25).

## Description

The invention relates to an oil filtration device, particularly for inlet oil-lines for screw compressors, and to a compression unit comprising such an oil filtration device.

In the field of industrial refrigeration circuits, it is well known that the lubrication oil of screw compressors must be properly collected, recirculated, filtered and returned to the screw compressor itself.

Nowadays, an oil-line A at the inlet of a screw compressor generally comprises hydraulically connected to each other in series:
- a first oil inlet connector B;
- a cartridge filter C comprising a filtration chamber with a filtration cartridge inside;
- a possible first hydraulic connection branch D between the first connector B and the cartridge filter C;
- a solenoid valve E to regulate the flow rate of oil;
- a second branch F connecting the cartridge filter C to the solenoid valve E;
- a flow switch G for detecting the flow rate of oil;
- a third branch H connecting the solenoid valve E to the flow switch G;
- a second oil outlet connector L;
- a fourth branch M connecting the flow switch G to the second connector L.

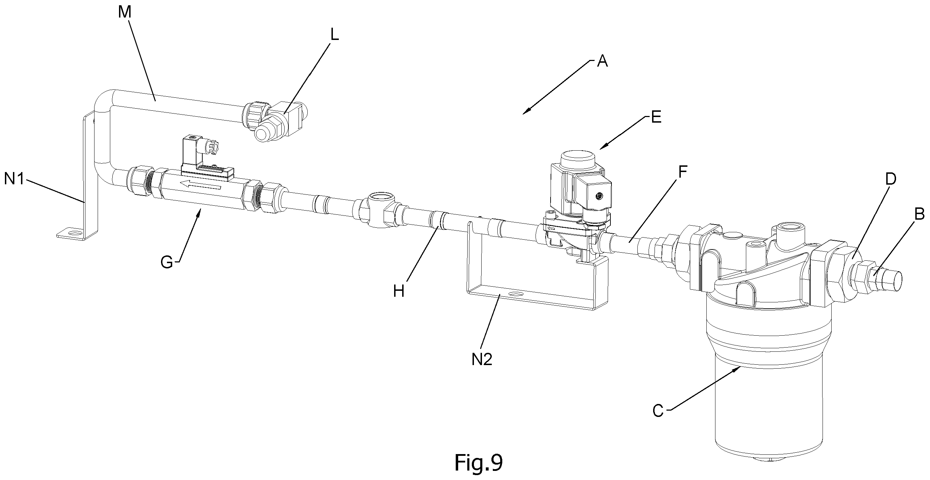

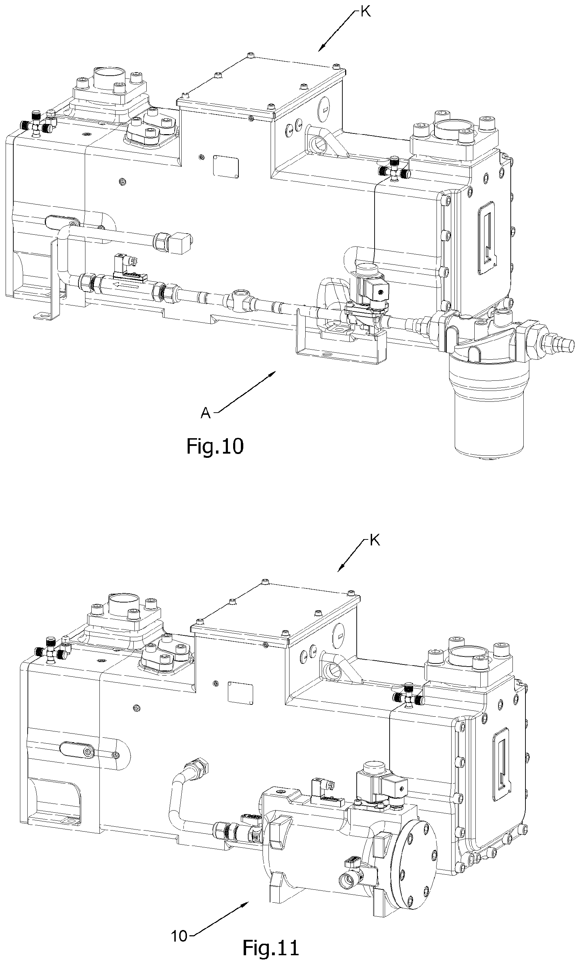

Such a known oil-line A is exemplified in figure 9, and is shown connected to a screw compressor K in figure 10.

In such a known type of oil-line, the hydraulic connection branches first branch D, second branch F, third branch H and fourth branch M each consist of one or more pieces of metal pipe, welded together.

At least some of these pieces must be fixed to corresponding support brackets N1 and N2 in order to make the connection of the oil-line A with the screw compressor K stable and structurally robust.

Such a well-known type of oil-line, although widespread and appreciated in the industry, has an important limitation related to the assembly timing of all the above-mentioned components, which may involve assembly operations of the various branches even by welding.

Of further inconvenience is the need to secure the oil-line by means of two or more brackets spaced between them, a necessity imposed by the predominantly longitudinal development of such oil-line.

In the presence of a compression unit comprising a plurality of screw compressors operating in parallel, the disadvantages outlined above multiply in proportion to the number of screw compressors, each of which must necessarily be equipped with its own inlet oil-line.

It is the task of the present invention to develop a filtration device for oil, particularly for oil-lines at the inlet of a screw compressor, capable of overcoming the aforementioned drawbacks and limitations of the known technique.

In particular, one aim of the invention is to develop a filtration device that is easier and quicker to set up.

Another aim of the invention is to develop a more compact filtration device than the oil-lines known today.

A further aim of the invention is to develop a compression unit for industrial refrigeration circuits that includes such an oil filtration device.

The above-mentioned task as well as the above-mentioned objects are achieved by a filtration device, particularly for inlet oil-lines for screw compressors, according to claim 1, as well as by a compression unit comprising such an oil filtration device according to claim 14.

Further features of the filtration device according to claim 1 and of the compression unit according to claim 14 are described in the respective dependent claims.

The aforesaid task and objects, together with the advantages that will be mentioned hereinafter, are indicated by the description of an embodiment of the invention, which is given by way of non-limiting example with reference to the attached drawings, where:
- figure 1 represents a perspective view of a compression unit according to the invention;
- figure 2 represents a perspective view of a filtration device according to the invention;
- figure 3 represents a longitudinal cross-sectional view of a part of the filtration device of figure 1 according to the invention;
- figure 4 represents a side view of a detail of the filtration device in figure 2;
- figure 5 represents the sectional view according to the line of section V-V of figure 4;
- figure 6 represents a sectional view according to a longitudinal cross-section plane of the filtration device according to the invention;
- figure 7 represents a perspective view of the filtration device according to the invention;
- figure 8 represents another perspective view of the filtration device according to the invention;
- figure 9 represents an oil-line according to the known technique;
- figure 10 represents a screw compressor of known type equipped with an oil-line of known type;
- figure 11 represents a screw compressor of known type equipped with a filtration device according to the invention.

With reference to the above-mentioned figures, a filtration device, particularly for oil-lines at the inlet of screw compressors according to the invention, is referred to as a whole as **10.**

This filtration device **10** comprises, hydraulically connected in series:
- a first oil inlet connector **11;**
- oil filtration means comprising a filtration chamber **13** inside of which is a filtration cartridge **14;**
- a first branch **11a** hydraulically connecting the first connector **11** and the oil filtration means;
- a solenoid valve **15** for shutting off the flow rate of oil, comprising a transit channel **16,** a plugging body **17** for plugging said transit channel **16** and handling means for said plugging body **17;**
- a second branch **18** connecting the oil filtration means and said solenoid valve **15;**
- a flow switch **19** for detecting the flow rate of oil; this flow switch **19** comprises a fluid passage duct **20,** movable means **21** arranged in said fluid passage duct **20** and configured to move during the passage of oil, a detector **22** configured to detect the movement of said movable means **21;**
- a third branch **24** connecting the solenoid valve **15** and the flow switch **19;**
- a second oil outlet connector **23;**
- a fourth branch **25** connecting said flow switch **19** and said second connector **23.**

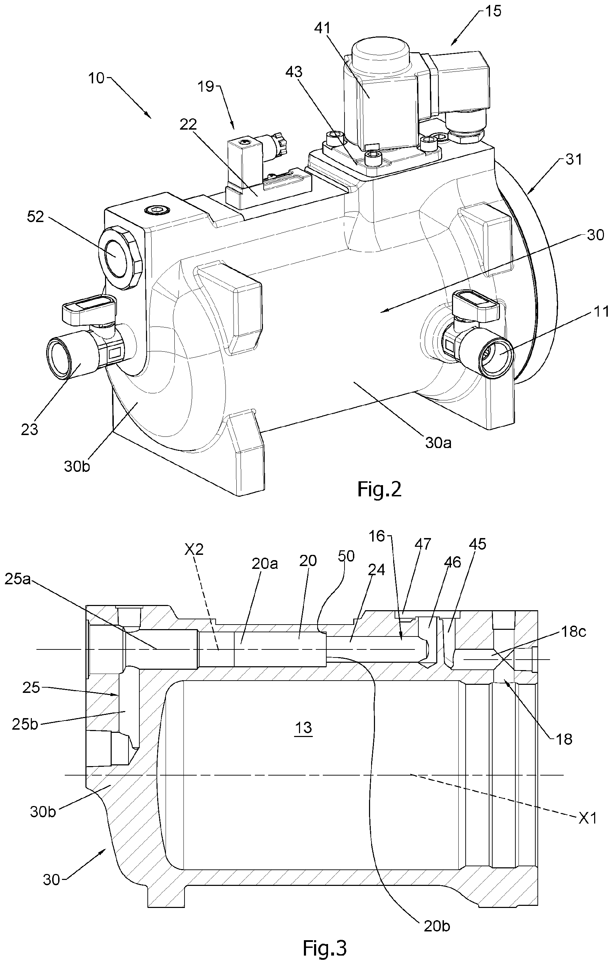

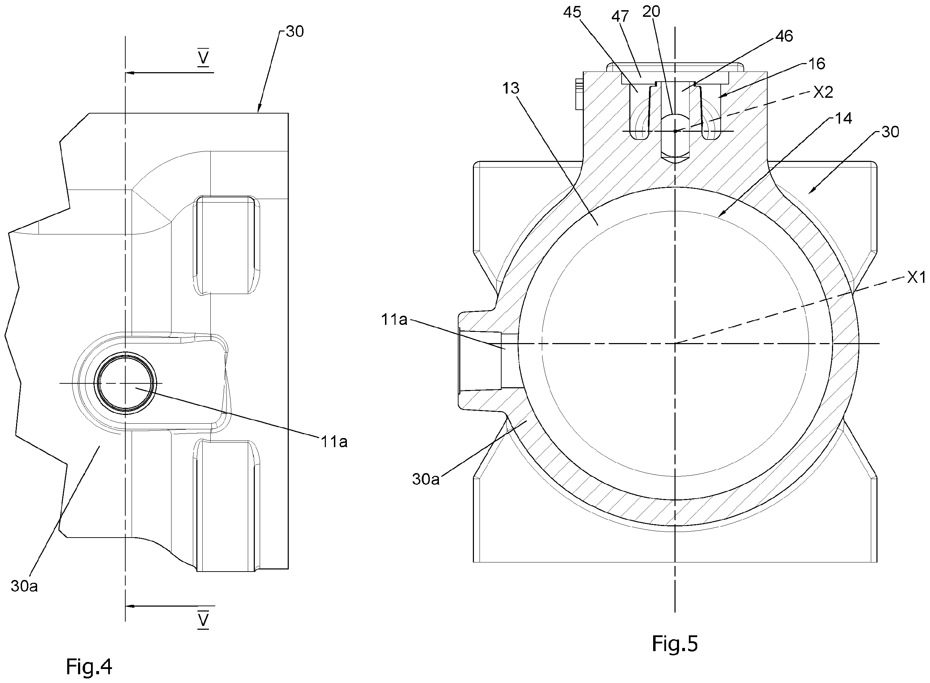

The peculiarity of the invention lies in the fact that the filtration device **10** comprises a single body **30** for oil filtration, clearly visible in the sections of figure 3 and figure 5, within said single body **30** for oil filtration being shaped:
- said filtration chamber **13;**
- said first branch **11a** hydraulically connecting the first connector **11** and the filtration chamber **13;**
- the transit channel **16** of the solenoid valve **15**;
- at least part of said second branch **18** connecting the filtration chamber **13** and the transit channel **16**;
- the fluid passage duct **20** of the flow switch **19**;
- the third branch **24** connecting the solenoid valve **15** and the flow switch **19**;
- the fourth branch **25** connecting the flow switch **19** and the second connector **23**.

This single body **30** for oil filtration consists of a metal casting.

The metallic material is, for example, an aluminium alloy.

Again, the metallic material is of the type designated EN AC-43200 AlSi 10Mg(Cu).

The filtration chamber **13** develops according to a reference direction **X1**.

The filtration chamber **13** is closed by a cover **31** attached to said single body **30,** e.g. by threaded connections.

As clearly visible from the section of the single body **30** in figure 3:
- the fluid passage duct **20,**
- said third branch **24,**
- and one part **25a** of said fourth branch **25**
are coaxial and develop along the same development axis **X2**.

In particular, the development axis **X2** is substantially parallel to said reference direction **X1**.

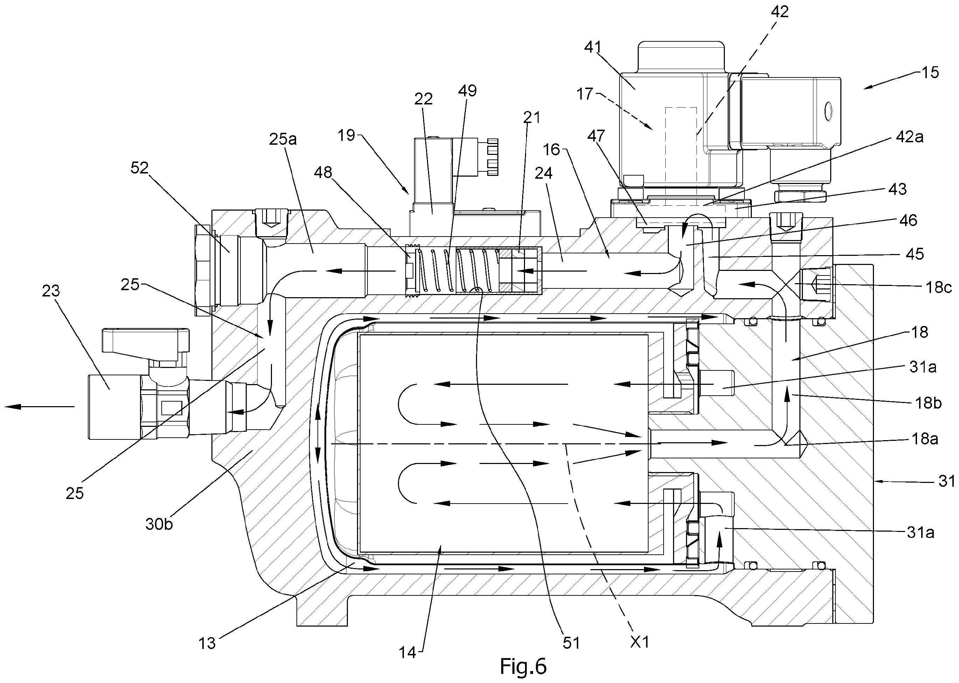

The solenoid valve **15** and the flow switch **19** are positioned on the upper part of said single body **30** for oil filtration, with respect to the normal position of use of the device **10** itself, as can be seen in figures 2 and 6.

In the present non-limiting embodiment of the invention, the solenoid valve **15** comprises:
- an electromagnetic head **41,** defining the handling means for the plugging body **17**;
- a movable core **42** bearing a shutter **42a,** defining the plugging body **17**;
- a flange attachment **43,**
which are arranged outside the single body **30**.

The solenoid valve **15** also includes:
- an inlet annular duct **45**;
- an outlet central duct **46** configured and positioned so as to be obstructed by said shutter **42a**;
- an intermediate chamber **47** passing between the inlet annular duct **45** and the outlet central duct **46.**

These inlet annular duct **45,** outlet central duct **46** and intermediate chamber **47** are defined in the single body **30** for oil filtration.

The body of the solenoid valve **15** is therefore not a separate metal body, to be joined to the hydraulic connection branches, but is defined by a portion of the same single body **30**.

The transit channel **16** of the solenoid valve **15** thus comprises said inlet annular duct **45,** outlet central duct **46** and intermediate chamber **47.**

In the embodiment of the invention described herein by way of illustration and not limitation of the invention itself, the flow switch **19** is of the permanent magnet type.

Specifically, this flow switch **19** includes, as clearly shown in figures 3 and 6:
- a striker ring **48** attached to one end of the outlet **20b** of the fluid passage duct **20**;
- the movable means **21,** positioned so as to be free to move within the fluid passage duct **20**;
- a thrust helical spring **49** interposed between the striker ring **48** and the movable means **21** so as to push said movable means **21** in a countercurrent direction with respect to the direction of oil passage in the fluid passage duct **20,** where this direction of oil passage is indicated by the arrows in figure 6;
- a support abutment **50,** clearly visible in figure 3, defined in the single body **30** at the inlet end **20a** of the fluid passage duct **20**;
- a detector **22** configured to detect the movement of movable means **21,** this detector **22** being fixed to the outside of the single body **30** at the fluid passage duct **20**.

In this example embodiment, the movable means **21** consist of one or more annular permanent magnets.

These annular permanent magnets are arranged coaxially within a guide sleeve **51** fitted inside the fluid passage duct **20**; this guide sleeve **51** can be seen in figure 6.

The operating principle of the flow switch **19** is that the annular permanent magnets are held in a position defined by the thrust helical spring **49.** Depending on the flow speed, the oil causes the annular permanent magnets to slide against the spring force. If the flow exceeds or drops below a pre-set switching point, a switch outside the flow switch **19** is activated without contact via the annular permanent magnets. The construction is absolutely watertight and can be easily dismantled for any cleaning that needs to be done.

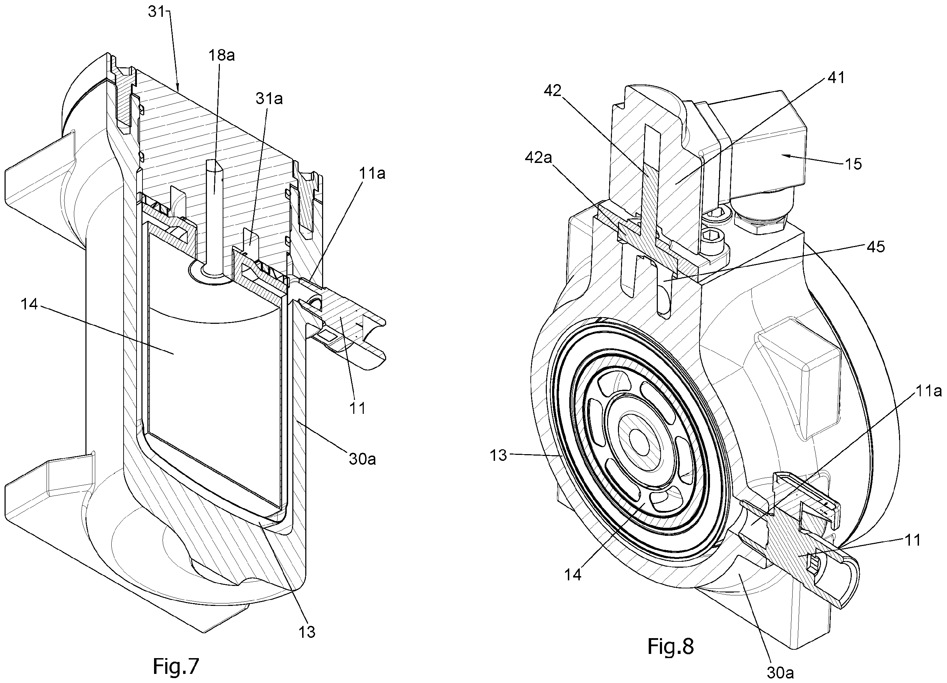

The first branch **11a** for the hydraulic connection between said first connector **11** and said cartridge filter **12,** comprises:
- a through hole defined on a side wall **30a** of the single body **30,** as clearly visible in figure 5, figure 7 and figure 8;
- and an annular channel **31a** defined on the cover **31,** communicating with the through-hole defined on the side wall **30a**.

The annular channel **31a** is essentially symmetrical to the reference direction **X1**.

The annular channel **31a** is open to the filtration chamber **13** and from it the oil flows substantially evenly to the cartridge **14**.

The second branch **18,** connecting the filtration chamber **13** and the transit channel **16**, comprises:
- a first part defined on the cover **31,** and comprising an axial duct **18a** at the outlet of the filtration chamber **13,** and a radial duct **18b,**
- and a second part **18c** defined in the single body **30**.

The radial duct **18b** connects the axial duct **18a** with the second part **18c** of the second branch **18**.

The second part **18c** is substantially elbow-shaped and connects the radial duct **18b** with the annular duct **45** of the transit channel **16**.

The fourth branch **25** for the connection between the flow switch **19** and the second connector **23,** includes:
- a first part **25a** contiguous and coaxial to the fluid passage duct **20**;
- a second part **25b** orthogonal to the first part and extending within a front wall **30b** of the single body **30,** which front wall **30b** is opposite the cover **31**.

The second part **25b** also includes a front connection hole with the second connector **23**.

Figure 11 shows a screw compressor **K** of a type known in itself, the oil inlet of which is connected via a pipe to the second connector **23** of a filtration device **10** according to the invention.

The filtration device **10** also includes a level viewer **52** attached to the front wall **30b** of the single body **30,** in a substantially coaxial position with the first part **25a** of the fourth branch **25,** as can be seen in figures 2 and 6.

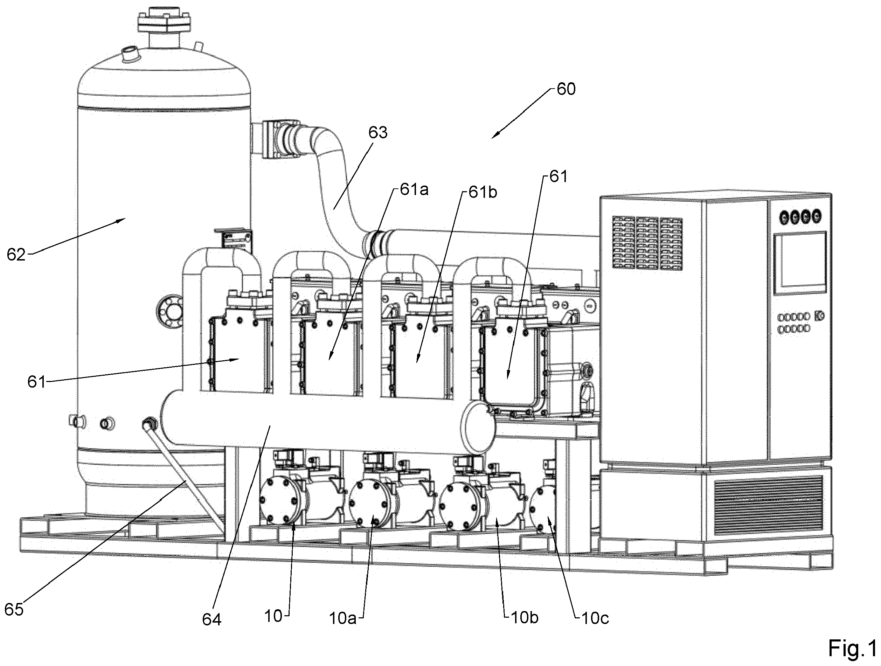

Also covered by the invention is a compression unit **60**, shown in figure 1, particularly for industrial refrigeration circuits, comprising:
- at least one screw compressor **61**;
- an oil separator **62**;
- a first line **63** for the compressed refrigerant, said first line **63** being a connection between the outlet of said at least one screw compressor **61** and the inlet of said oil separator **62;**
- a second line **64** for the refrigerant to be compressed, said second line **64** being connected to the inlet of said at least one screw compressor **61**.

Said at least one screw compressor **61** is connected to an oil filtration device **10** as described above.

In particular, and as an example, the compression unit **60** includes a plurality of screw compressors, e.g. four screw compressors **61, 61a, 61b, 61c,** arranged to operate in parallel, each of said screw compressors **61, 61a, 61b, 61c** being connected to a corresponding oil filtration device **10, 10a, 10b, 10c.** The filtration devices **10, 10a, 10b, 10c** have their own first connector **11** connected to an outlet pipe **65** of the separator **62**.

Practically, it has been established that the invention achieves the intended task and objects.

In particular, the invention developed a filtration device that was easier and quicker to set up.

In addition, the invention developed a filtration device that drastically reduces the risk of leakage due to the absence of welded joints between its parts.

The absence of components joined by welding makes setting up operations of the filtration device according to the invention much quicker.

Furthermore, the invention developed a more compact filtration device than the oil-lines known today, so that its use allows for better organisation of the space around the screw compressor with which the filtration device is associated. Again, the invention developed a filtration device with a high level of standardisation, and therefore equally effective with different screw compressor models.

In addition, the invention developed a compression unit for industrial refrigeration circuits that includes such an oil filtration device.

The invention thus conceived is susceptible of numerous modifications and variations, all of which are within the scope of the inventive concept; moreover, all the details may be replaced by other technically equivalent elements.

In practice, the components and materials used, as long as they are compatible with the specific use, as well as the dimensions and the contingent shapes can be any one according to the requirements and the prior art.

If the characteristics and techniques mentioned in any claim are followed by reference signs, these reference signs are to be intended for the sole purpose of increasing the intelligibility of the claims and, consequently, such reference signs have no limiting effect on the interpretation of each element identified by way of example by these reference signs.

## Claims

1. Filtration device (10), particularly for oil-lines at the inlet of screw compressors, including hydraulically connected to each other in series:
- a first oil inlet connector (11);
- oil filtration means, comprising a filtration chamber (13) inside of which is a filtration cartridge (14);
- a first branch (11a) for the hydraulic connection between said first connector (11) and said oil filtration means;
- a solenoid valve (15) for shutting off the flow rate of oil, comprising a transit channel (16), a plugging body (17) for obstructing said transit channel (16) and handling means for said plugging body (17);
- a second branch (18) connecting said oil filtration means to said solenoid valve (15);
- a flow switch (19) for detecting the flow rate of oil, said flow switch (19) comprising a fluid passage duct (20), movable means (21) arranged in said fluid passage duct (20) and configured to move upon the passage of oil, and a detector (22) configured to detect the movement of said movable means (21);
- a third branch (24) connecting said solenoid valve (15) to said flow switch (19);
- a second oil outlet connector (23);
- a fourth branch (25) connecting said flow switch (19) to said second connector (23),
**characterised by** comprising a single body (30) for oil filtration consisting of a metal casting, within said single body (30) being shaped:
- said filtration chamber (13);
- said first branch (11a) hydraulically connecting said first connector (11) and said filtration chamber (13);
- said transit channel (16) of said solenoid valve (15);
- said second branch (18) connecting said filtration chamber (13) to said transit channel (16);
- said fluid passage duct (20) of said flow switch (19);
- said third branch (24) connecting said solenoid valve (15) to said flow switch (19);
- said fourth branch (25) connecting said flow switch (19) to said second connector (23).

2. Device according to claim 1, **characterised in that** said filtration chamber (13) develops according to a reference direction (X1).

3. Device according to claim 1, **characterised in that** said filtration chamber (13) is closed by a cover (31) fixed to said single body (30) for the oil filtration.

4. Device according to claim 3, **characterised in that** said first branch (11a) includes:
- a through-hole defined on a side wall (30a) of said single body (30);
- an annular channel (31a) defined on said cover (31), communicating with said through-hole defined on said side wall (30a).

5. Device according to claim 2, **characterised in that:**
- said fluid passage duct (20),
- said third branch (24),
- and a part of said fourth branch (25)
are coaxial and develop along the same development axis (X2).

6. Device according to the preceding claim, **characterised in that** said development axis (X2) is substantially parallel to said reference direction (X1).

7. Device according to one or more of the preceding claims, **characterised in that** said solenoid valve (15) and said flow switch (19) are positioned on the upper part of said single body (30) for the oil filtration, with respect to a normal position of use of the device (10) itself.

8. Device according to one or more of the preceding claims, **characterised in that** said solenoid valve (15) comprises:
- an electromagnetic head (41);
- a movable core (42) bearing a shutter (42a);
- a flange attachment (43),
which are arranged on the outside of said single body (30) for the oil filtration, said solenoid valve (15) also including:
- an inlet annular duct (45);
- an outlet central duct (46) configured and positioned to be obstructed by said shutter (42a);
- an intermediate chamber (47) for the passage between said inlet annular duct (45) and said outlet central duct (46),
said inlet annular duct (45), outlet central duct (46) and intermediate chamber (47) being defined in said single body (30) for the oil filtration.

9. Device according to one or more of the preceding claims, **characterised in that** said flow switch (19) comprises:
- a striker ring (48) attached to an outlet end (20b) of said fluid passage duct (20);
- said movable means (21), positioned so as to be free to move within said fluid passage duct (20);
- a thrust helical spring (49) interposed between said striker ring (48) and said movable means (21) so as to push said movable means (21) in a countercurrent direction with respect to the direction of passage of oil in the fluid passage duct (20);
- a support abutment (50) defined in said single body (30) at the inlet end (20a) of said fluid passage duct (20);
- a detector (22) configured to detect the movement of said movable means (21), said detector (22) being fixed to the outside of said single body (30) at said fluid passage duct (20).

10. Device according to one or more of the preceding claims, **characterised in that** said second branch (18) comprises:
- a first part defined on said cover (31) and comprising an axial duct (18a) exiting said filtration chamber (13) and a radial duct (18b);
- a second part (18c) defined in said single body (30).

11. Device according to claim 10, **characterised in that** said radial duct (18b) connects said axial duct (18a) with said second part (18c) of said second branch (18).

12. Device according to claim 11 in combination with claim 8, **characterised in that** said second part (18c) is substantially elbow-shaped and connects said radial duct (18b) with said annular duct (45) of said transit channel (16).

13. Device according to any of claims 3 or 4, **characterised in that** said fourth branch (25) comprises:
- a first part (25a) contiguous and coaxial to said fluid passage duct (20);
- a second part (25b) orthogonal to said a first part (25a) and extending within a front wall (30b) of said single body (30), said front wall (30b) being opposite said cover (31).

14. Compression unit (60), particularly for industrial refrigeration circuits, comprising:
- at least one screw compressor (61);
- an oil separator (62);
- a first line (63) for the compressed refrigerant, said first line (63) being a connection between the outlet of said at least one screw compressor (61) and the inlet of said oil separator (62);
- a second line (64) for the refrigerant to be compressed, said second line (64) being connected to the inlet of said at least one screw compressor (61), **characterised in that** said at least one screw compressor (61) is connected to an oil filtration device (10) according to one or more of claims 1 to 13.

15. Compression unit (60) according to the preceding claim, **characterised in that** it comprises a plurality of screw compressors (61, 61a, 61b, 61c) arranged to operate in parallel, each of said screw compressors (61, 61a, 61b, 61c) being connected to a corresponding oil filtration device (10, 10a, 10b, 10c).
